# EUROPÄISCHE PATENTSCHRIFT

(11) **EP 1 693 245 B1**
(45) Veröffentlichungstag und Bekanntmachung des Hinweises auf die Patenterteilung: **14.05.2008**
(21) Anmeldenummer: 05111118.5
(22) Anmeldetag: 23.11.2005
(51) Int. Cl.: B60N 2/01, B60N 2/06, B60N 2/14

(54) **Sitzreihen-Anordnung eines Fahrzeuges**
Seat rows arrangement for a vehicle.
Disposition de rangées de sieges dans un véhicule.

(30) Priorität: 22.02.2005 DE 102005008264; 28.02.2005 DE 102005009597
(43) Veröffentlichungstag der Anmeldung: 23.08.2006
(73) Patentinhaber: Ford Global Technologies, LLC, A subsidary of Ford Motor Company, Dearborn, MI 48126 (US)
(72) Erfinder: Gardiner, Geoffrey, 4900, Spa (BE)
(74) Vertreter: Dörfler, Thomas

(56) Entgegenhaltungen:
- WO-A-02/04245
- DE-A1- 19 723 022
- FR-A- 2 775 637
- GB-A- 191 214 074
- US-A- 1 397 594
- US-A- 5 611 589
- US-A- 5 636 884
- US-B1- 6 378 941
- PATENT ABSTRACTS OF JAPAN Bd. 2003, Nr. 09, 3. September 2003 (2003-09-03) -& JP 2003 127722 A (KASAI KOGYO CO LTD), 8. Mai 2003 (2003-05-08)

## Beschreibung

Die Erfindung betrifft eine Sitzreihen-Anordnung eines Fahrzeuges, bestehend aus zwei äußeren Sitzen und einem mittleren Sitz nach dem Oberbegriff des Anspruches 1.

Aus der US 1 397 594 ist eine Sitzreihen-Anordnung für ein Fahrzeug nach dem Oberbegriff des Anspruchs 1 bekannt. Das Fahrzeug weist zwei Sitzreihen mit jeweils zwei äußeren Sitzen auf. Ein gemeinsamer mittlerer Sitz ist auf Schienen zwischen den beiden Sitzreihen verschiebbar, so daß er sich entweder zwischen den beiden äußeren Sitzen der vorderen Sitzreihe in einer vorderen Sitzposition oder zwischen den beiden äußeren Sitzen der hinteren Sitzreihe in einer hinteren Sitzposition befindet.

Eine derartige Sitzreihen-Anordnung ist in Fahrzeugen z. B. für die erste und/oder einer hinteren Sitzreihe von Großraumlimousinen oder Kleinbusen bekannt. Je nach Fahrzeugbreite und Größe der Fahrzeuginsassen kann es dabei zu Komforteinbußen kommen, wenn die Fahrzeuginsassen zu eng in der Sitzreihe nebeneinander sitzen. An der Schulter weist der Mensch die größte Breite bezüglich seiner Körperabmessung auf, von daher bestimmt die Schulterfreiheit maßgeblich das Komfortgefühl. Die Schulterfreiheit, die ein Fahrzeuginsasse genießt, beeinflußt die Bewegungsfreiheit und das Raumgefühl des Fahrzeuginsassen. Unabhängig kann eine zu enge Sitzanordnung auch die Bewegungsfreiheit, z. B. der Arme, einengen. Insbesondere der Fahrer kann durch den neben ihm sitzenden Beifahrer so in seiner Bewegungsfreiheit eingeengt sein, daß er sich nicht optimal auf den Verkehr konzentrieren kann. Aber auch auf einer hinteren Sitzreihe, unabhängig ob diese in der zweiten oder dritten Sitzreihe angeordnet ist, kann die Enge, vor allem im Schulterbereich, für die Passagiere als unangenehm empfunden werden.

Aufgabe der Erfindung ist es demnach, eine Sitzreihen-Anordnung zu schaffen, die den Fahrzeuginsassen ein erhöhtes Komfortgefühl, insbesondere ein größeres Raumgefühl und eine höhere Bewegungsfreiheit ermöglicht.

Gelöst wird diese Aufgabe mit den Merkmalen des Anspruches 1.

Indem der mittlere Sitz aus der Normalposition zwischen den beiden äußeren Sitzen nach vorne und/oder nach hinten in eine vordere und/oder eine hintere Sitzposition verschiebbar ist, können sich die Fahrzeuginsassen der Sitzreihe bequemere, in Längsrichtung versetzte Sitzpositionen verschaffen. Der Effekt tritt unmittelbar beim Verschieben des mittleren Sitzes ein, da nun die Schultern der Fahrzeuginsassen nicht mehr in einer Reihe angeordnet sind. Indem nun die Fahrzeuginsassen nicht mehr unmittelbar Schulter an Schulter sitzen, erhöht sich die Schulterfreiheit der Fahrzeuginsassen und es steigt deren Bewegungsfreiheit und Raumgefühl in der versetzten Sitzposition unmittelbar an.

Dabei ist diese Sitzreihen-Anordnung in jeder Sitzreihe möglich, d. h. sowohl in der Frontsitzreihe als auch der 2. oder 3. Sitzreihe eines Fahrzeuges. Ist die hinterste Sitzreihe eines Fahrzeuges betroffen, so wird der hintere Sitz bei einer Verschiebung normalerweise in den Gepäckraum verschoben, was zu einer geringfügigen Verkleinerung desselbigen führt. Dieser geringfügige Nachteil wird jedoch durch den Zugewinn an Komfort für die Sitzreihen-Passagiere erheblich ausgeglichen. Wird dagegen der mittlere Sitz nach vorne geschoben, vorausgesetzt der dann verbleibende Fußraum ist groß genug für die Komfortansprüche des Passagiers auf dem mittleren Sitz, erhöht sich das Volumen des Gepäckraumes sogar.

Der Verschiebung des mittleren Sitzes kann auch als Funktion bei der Belegung des mittleren Sitzes mit einem Kleinkind genutzt werden, wie es z. B. aus der JP2003127722 für einen äußeren Sitz bekannt ist. Dann kann der mittlere Sitz aus der zweiten Sitzreihe soweit nach vorne verschoben werden, daß er sich unmittelbar hinter dem Fahrersitz befindet, so daß wenn nur ein Fahrer mit einem Kind unterwegs ist, der Fahrer auch während der Fahrt direkten Zugriff auf das Kind auf dem mittleren Sitz hat, ohne daß der Fahrer seine Sitzposition ändern muß. Das gleiche gilt natürlich auch für den Zugriff durch einen Beifahrer. Dann können z. B. zwei Erwachsene auf den Vordersitzen sitzen, während das Kleinkind sich in einer vorderen Sitzposition auf dem mittleren Sitz der zweiten Sitzreihe fast unmittelbar zwischen den beiden Erwachsenen befindet. Insgesamt erlaubt dies einen wesentlich einfacheren Zugriff auf das Kleinkind als in bisher bekannten Sitzanordnungen.

Dabei kann der mittlere Sitz eine zur Fahrzeuglängsachse gesehen schräge Verschieberichtung aufweisen. Z. B. kann, wenn der mittlere Sitz einer vorderen Sitzreihe nach vorne oder hinten geschoben wird, er gleichzeitig eine geringfügige Verschiebung nach außen, weg vom Fahrer, erfahren. Auch in einer hinteren Sitzreihe kann dies ausgenutzt werden, wenn der mittlere Sitz, wie oben beschrieben, mit einem Kleinkind besetzt ist. Dann kann er vorteilhafterweise zur Seite des Fahrers oder Beifahrers hin verschoben werden. Aber auch bei der Verschiebung nach hinten kann die seitliche Verschiebung ausgenutzt werden, um z. B. neben dem mittleren Sitz in der hinteren Sitzposition auf einer Seite einen größeren Gepäckraum zu erhalten.

Vorteilhaft weist der mittlere Sitz in vorderer und/oder hinterer Sitzposition eine andere Sitzhöhe auf als in der Normalposition. Z. B. kann der mittlere Sitz in der hinteren Sitzposition eine erhöhte Position aufweisen, so daß der Passagier des mittleren Sitzes einen besseren Überblick erhält und ggf. besseren Kontakt zu den Passagieren auf den äußeren Sitzen halten kann. Umgekehrt kann in einer vorderen Sitzposition die Sitzhöhe abgesenkt werden, damit der Fahrer und/oder die Passagiere auf den äußeren Sitzen nicht in der Sicht eingeschränkt werden.

Weiterhin kann der mittlere Sitz in vorderer und/oder hinterer Sitzposition drehbar sein. Drehbar in diesem Sinne heißt Drehen um die Hochachse, d. h. die Sitzposition ist dann nicht mehr parallel zur Fahrzeuglängsachse, sondern weist einen Winkel dazu auf. Dies kann z. B. genutzt werden, um den Fußraum des Passagiers des mittleren Sitzes optimal zu gestalten, wenn er z. B. sich in vorderer Sitzposition befindet, so daß die Beine dieses Passagiers zwischen Fahrer und Beifahrersitz befinden. Dann sollten die Beine weg vom Fahrer zeigen, eher Richtung Beifahrer, was durch eine Drehung des Sitzes in Richtung des Beifahrers einfach bewirkt werden kann. Diese Drehung ist auch hilfreich, wenn der mittlere Sitz neben der Längsverschiebung eine seitliche Verschiebung erfährt. Auch dann kann der Beinraum für den Passagier durch Drehen des mittleren Sitzes angepaßt werden.

Vorteilhaft ist dabei, wenn die Verschiebung des mittleren Sitzes in die vordere und/oder die hintere Sitzposition eine gleichzeitige Verdrehung des Sitzes bewirkt. Dann muß sich der Passagier nicht um die richtige Dreheinstellung des Sitzes kümmern, sondern diese ergibt sich automatisch durch die augenblickliche Längsposition des mittleren Sitzes.

In einer weiteren Ausführung ist auch mindestens einer der äußeren Sitze in eine vordere und/oder hintere Sitzposition verschiebbar. Diese z. B. aus der WO 02/04245 bekannte Maßnahme kann günstig mit der erfinderischen Sitzanordnung kombiniert werden. Dann kann, wenn z. B. der mittlere Sitz nach hinten verschoben wird, einer oder beide äußere Sitze nach vorne verschoben werden, wodurch die Verschiebung des mittleren Sitzes geringfügiger ausfallen kann. Es kann aber auch ein oder beide äußeren Sitze ebenfalls mit dem mittleren Sitz nach hinten geschoben werden, aber um ein geringeres Maß. Dann wird bei den äußeren Sitzen ebenfalls die Beinfreiheit erhöht. Genauso ist es aber umgekehrt möglich den mittleren Sitz geringfügig nach vorne und einen oder beide äußeren Sitze nach hinten zu verschieben. Insgesamt bleibt damit der Gepäckraum von der Größe ungefähr gleich, während das Komfortgefühl insbesondere der Passagiere auf den äußeren Sitzen wesentlich zunimmt. Prinzipiell ist mit dieser Sitzreihen-Anordnung jede Verschiebung der drei Sitze untereinander und gegeneinander möglich.

Vorteilhaft ist auch, wenn mindestens einer der äußeren Sitze in eine innere Sitzposition verschiebbar ist, wenn der mittlere Sitz sich nicht direkt neben diesem Sitz befindet. Sobald der Platz innen neben einem äußeren Sitz frei ist, weil der mittlere Sitz sich in einer vorderen oder hinteren Sitzposition befindet und/oder der äußere Sitz sich in einer vorderen oder hinteren Sitzposition befindet, kann der äußere Sitz um ein bestimmtes Maß nach innen verschoben werden. Damit erhält der Passagier des äußeren Sitzes eine größere Schulterfreiheit zur Fahrzeugseitenwand, was ihm ein erhöhtes Komfortgefühl beschert. Dabei kann der äußere Sitz eine zur Fahrzeugquerachse gesehen schräge Verschieberichtung nach innen aufweisen. Dies ermöglicht eine einfachere Handhabung für den Passagier, indem direkt eine Sitzposition vorgegeben wird, die eine Längs- und Querverschiebung des äußeren Sitzes beinhaltet.

Zusätzlich kann die Verschiebung des äußeren Sitzes in eine andere Sitzposition eine gleichzeitige Verdrehung des Sitzes bewirken. Dann kann bewußt eine solche verdrehte Sitzposition eingestellt werden, die für den Passagier z. B. die größtmögliche Beinfreiheit erlaubt. Auch dies erleichtert die Handhabung für den Passagier des äußeren Sitzes, da er jetzt diese optimale, verdrehte Sitzposition nicht selber suchen bzw. einstellen muß, sondern sich diese durch die Verschiebung von selber ergibt.

In einer weiteren Ausführung ist mindestens einer der äußeren Sitze drehbar, wenn der mittlere Sitz sich nicht in einer Position direkt neben diesem Sitz befindet. Diese Funktion kann vorteilhaft genutzt werden, wenn sich z. B. der mittlere Sitz in einer hinteren Sitzposition befindet. Dann können die Passagiere der äußeren Sitze ihre Sitze so mit Blickrichtung nach innen verdrehen, daß der Kontakt zum Passagier des mittleren Sitzes erleichtert ist, d. h. die äußeren Passagiere müssen den Kopf nicht so stark verdrehen, um den mittleren Passagier zu sehen. Zusätzlich steigt das Komfortgefühl, da durch die Drehung die Schulterfreiheit wächst, da der Abstand zur Seitenwand vom äußeren Passagier als größer empfunden wird.

In einer vorteilhaften Ausführung sind die Sitze auf am Fahrzeugboden befestigten Sitzschienen verschiebbar. Dies stellt eine sehr robuste Konstruktion dar und kann konstruktiv mit wenig Aufwand gelöst werden. Weiterhin ist durch die Sitzschienen eine problemlose Verschiebung aller drei Sitze möglich.

In einer weiteren Ausführung der Erfindung ist jeder Sitz am Fahrzeugboden verankert ist und weist eigene Sitzschienen auf. Dann erfolgt die Verschiebung eines jeden Sitzes durch seine eigene Sitzschiene. Eine solche Konstruktion ist günstig, wenn z. B. verschiedene Fahrzeugvarianten bestehen, und nicht alle Varianten mit der erfinderischen Verschiebefunktion ausgeführt sind. Dann sind nur Befestigungspunkte im Fahrzeug vorgesehen, wo die Sitze befestigt werden können. Günstig ist jedoch auch die Kombination dieser Sitzschienen am Sitz mit Sitzschienen im Fahrzeugboden. Dann kann z. B. eine größere Verschiebung in Längsrichtung über die fahrzeugseitigen Sitzschienen erfolgen, während eine geringfügige seitliche Verschiebung über die sitzeigenen Sitzschienen erfolgt. Genauso kann dies auch umgekehrt erfolgen.

Nicht hinderlich für das vorliegende Konzept ist es, wenn einzelne Sitze dieser Sitzreihen-Anordnung zumindest zeitweise aus der Sitzreihe entfernt werden können, weil nicht alle Sitze mit Passagieren besetzt werden müssen und um z. B. mehr Gepäckraum zu erhalten und/oder ein noch höheres Komfortgefühl für die verbleibenden Passagiere zu erzielen.

Des weiteren betrifft die Erfindung eine Fahrzeug mit einer Sitzreihen-Anordnung, bei dem ein mittlerer Sitz nach hinten verschoben werden kann, und bei dem ein Fahrzeugboden vor der Sitzreihe im Fußraum der Sitzreihe eine tiefere Ebene und hinter der Sitzreihe eine höhere Ebene aufweist. Eine derartiges Fahrzeug stellt jeder bekannte Personenkraftwagen dar, bei dem sich vor der hinteren, zweiten Sitzreihe ein Fußraum für die Passagiere dieser Sitzreihe und hinter der Sitzreihe ein höherliegender Gepäckraum befindet. Der Fußraum befindet sich vor der Hinterachse und kann damit relativ weit abgesenkt werden. Dagegen ist hinter der Sitzreihe die Hinterachse unter dem Fahrzeugboden angeordnet, wodurch der Fahrzeugboden in diesem Bereich eine höhere Ebene aufweisen muß.

Vorteilhaft ist dann im Bereich zwischen den äußeren Sitzen der Fahrzeugboden so abgesenkt, daß vor dem zurückgeschobenen mittleren Sitz ein Fußraum zwischen den beiden äußeren Sitzen gebildet wird. Dann hat der Passagier des mittleren Sitzes auch in zurückgeschobener, hinterer Sitzposition die volle Sitzhöhe zur Verfügung, und der Sitz selber muß in seiner Höhe nicht gegenüber den äußeren Sitzen angehoben werden. Möglich ist dies, wenn in der Fahrzeugmitte der Fahrzeugboden bis kurz vor der Hinterachse abgesenkt werden kann. Unter den äußeren Sitzen befinden sich oft noch Achsaufhängungen und/oder Karosserieverbindungsknoten, so daß dort eine Absenkung des Fahrzeugbodens konstruktiv kaum möglich ist. Dann kann die auf den mittleren Fußraum begrenzte Absenkung wirkungsvoll den benötigten Fußraum für den mittleren Sitz schaffen.

Weiter vorteilhaft ist, wenn Sitzschienen links und rechts des Fußraumes für den mittleren Sitz angeordnet sind. Da der mittlere Sitz eine relativ große Verschiebung nach hinten erfahren kann, werden die Sitzschienen vorteilhafterweise am Fahrzeugboden befestigt. Indem die Sitzschienen links und rechts des Fußraumes angeordnet sind, wird der mittlere Passagier in seinem Komfort nicht eingeschränkt, da seine Füße nicht auf den Sitzschienen zum Stehen kommen. Dabei können die Sitzschienen mittels eines Gestelles mit dem Fahrzeugboden verbunden sein. Oder sie können mit der Sitzbefestigung der äußeren Sitze verbunden sein.

Vorteilhaft verbindet eine Verbindungswand den Fahrzeugboden im Fußraum des mittleren Sitzes mit einer unter einem äußeren Sitz befindlichen höheren Ebene des Fahrzeugbodens. An dieser Verbindungswand kann dann eine Sitzschiene befestigt werden. Da diese Verbindungswand überwiegend senkrecht ausgerichtet ist, zumindest aber relativ steil verläuft, befindet sich die Sitzschiene automatisch nicht am Boden des Fußraumes, dort wo die Füße des mittleren Passagiers auf dem Fahrzeugboden stehen.

Weitere Einzelheiten der Erfindung sind aus den Abbildungen ersichtlich. Es zeigen:
Figur 1 eine Sitzanordnung eines Fahrzeuges mit zwei Sitzreihen und der 2. Sitzreihe in Normalposition;
Figur 2 die Sitzanordnung aus Figur 1 mit nach vorne verschobenen mittleren Sitz;
Figur 3 die Sitzanordnung aus Figur 1 mit nach hinten verschobenen mittleren Sitz und nach vorne verschobenen äußeren Sitzen;
Figur 4 die Sitzanordnung aus Figur 1 mit nach hinten verschobenen mittleren Sitz und nach innen verschobenen äußeren Sitzen;
Figur 5 die Sitzanordnung aus Figur 1 mit nach hinten verschobenen mittleren Sitz und nach innen gedrehten äußeren Sitzen;
Figur 6 eine Sitzanordnung eines Fahrzeuges mit einer Frontsitzreihe in Normalposition;
Figur 7 die Sitzanordnung aus Figur 6 mit nach hinten verschobenen mittleren Sitz;
Figur 8 die Sitzanordnung aus Figur 6 mit nach hinten verschobenen und zum Fahrer gedrehten mittleren Sitz und zum Fahrer gedrehten äußeren Sitz;
Figur 9a - c eine perspektivische Ansicht der Verschiebung der Sitzreihe aus Figur 4; und
Figur 10 eine perspektivische Ansicht eines Fahrzeugbodens für eine Sitzanordnung nach Figur 4.

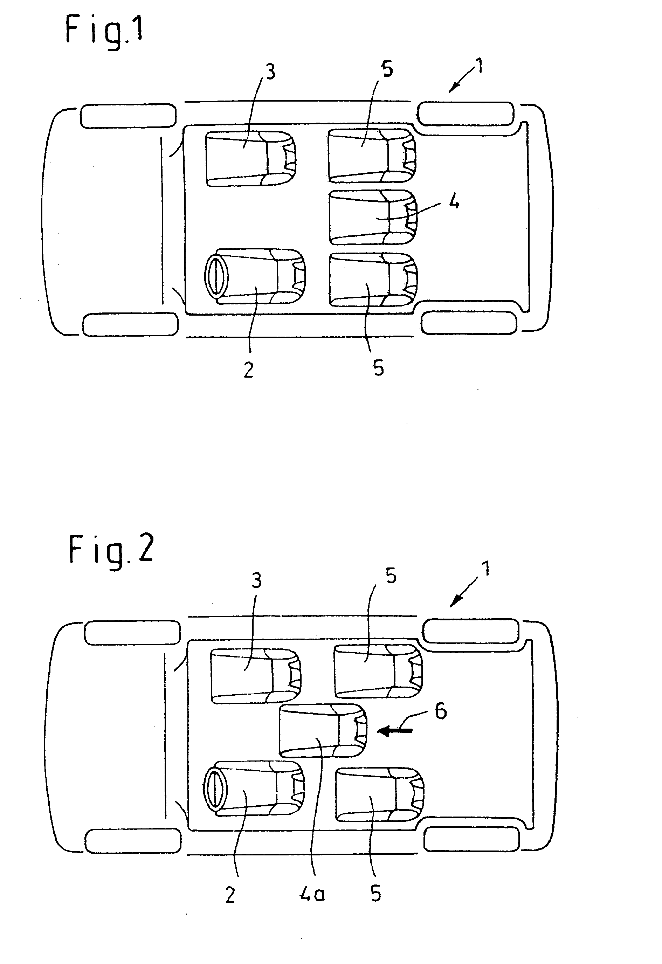

In Figur 1 ist eine Sitzanordnung eines Fahrzeuges 1 mit zwei Sitzreihen dargestellt, wobei die Frontsitzreihe aus dem Fahrersitz 2 und dem Beifahrersitz 3 und die 2. Sitzreihe aus dem mittleren Sitz 4 und den beiden äußeren Sitzen 5 besteht. Die Sitze der 2. Sitzreihe befinden sich in Normalposition, d.h. sie sind nicht gegeneinander verschoben oder verdreht und sind in einer Linie angeordnet

In Figur 2 ist der mittlere Sitz 4 aus Figur 1 nach vorne verschoben, dargestellt durch den Verschiebepfeil 6. Der mittlere Sitz 4a befindet sich nun zwischen Fahrersitz 2 und Beifahrersitz 3, jedoch noch nach hinten versetzt. Eine solche Sitzanordnung ist geeignet, wenn z. B. ein Kleinkind auf dem mittleren Sitz 4a in einem Kindersitz befördert wird. Dann haben sowohl Fahrer als auch Beifahrer auch während der Fahrt bequem Zugriff auf das Kind, ohne daß sie sich abschnallen oder gar ihre Sitze 2, 3 verlassen müssen.

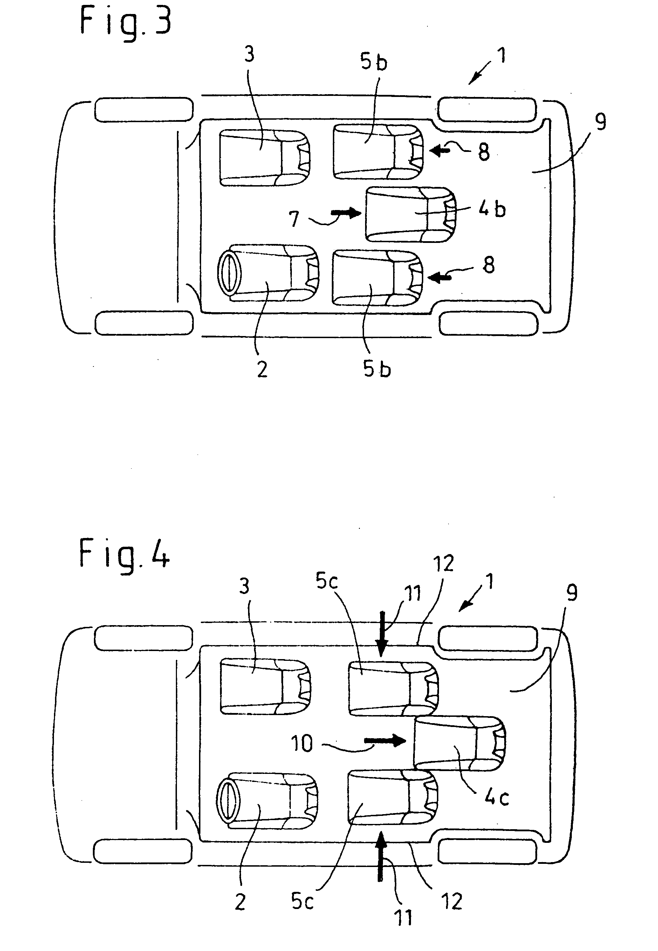

In Figur 3 ist der mittlere Sitz 4b gegenüber Figur 1 geringfügig nach hinten verschoben, gekennzeichnet durch den Verschiebepfeil 7. Die beiden äußeren Sitze 5b sind geringfügig nach vorne verschoben, gekennzeichnet durch die Verschiebepfeile 8. Obwohl jeder der drei Sitze nur um einen kleinen Weg verschoben wird, ist der Komfortgewinn sofort erheblich, da sich die drei Sitze nun nicht mehr in einer Reihe befinden. Der Gepäckraum 9 selber wird durch das Verschieben nicht eingeschränkt, da der Raumverlust hinter dem mittleren Sitz 4b durch den Raumgewinn hinter den beiden äußeren Sitzen 5b ausgeglichen wird.

In Figur 4 ist der mittlere Sitz 4c gegenüber Figur 1 weit nach hinten verschoben, gekennzeichnet durch den Verschiebepfeil 10. Die beiden äußeren Sitze 5c sind nach innen verschoben, gekennzeichnet durch die Verschiebepfeile 11. Bei dieser Sitzanordnung genießt der Passagier des mittleren Sitzes 4c eine hohe Bewegungsfreiheit, da sich rechts und links kein weiterer Passagier auf seiner Höhe befindet. Die Passagiere der beiden äußeren Sitze 5c erhalten durch die Verschiebung nach innen eine erhöhte Schulterfreiheit zur Fahrzeugseitenwand 12, wodurch deren Komfortgefühl, zumal zwischen ihnen kein dritter Passagier sitzt, ebenfalls erheblich erhöht ist.

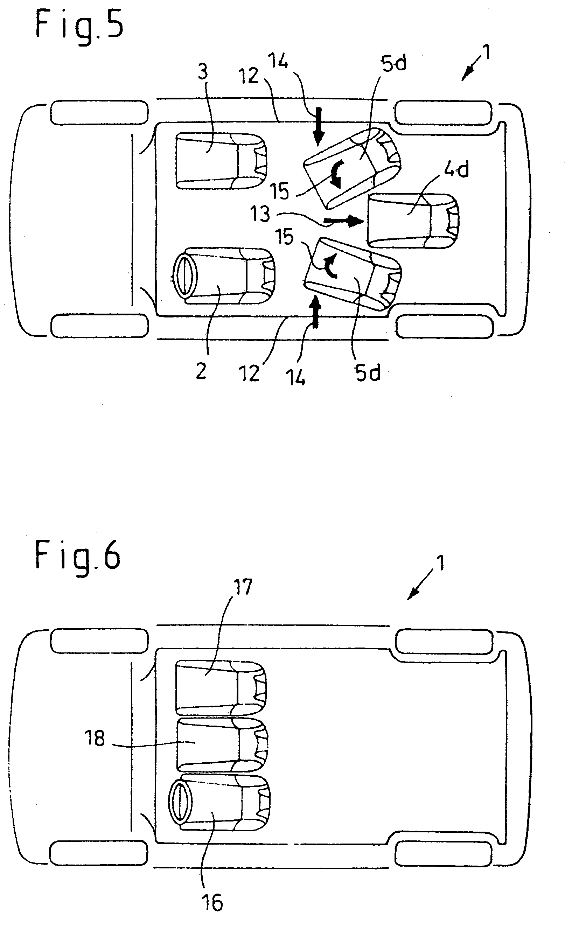

In Figur 5 ist analog zu Figur 4 der mittlere Sitz 4d weit nach hinten verschoben, gekennzeichnet durch den Verschiebepfeil 13, und die beiden äußeren Sitze 5d sind nach innen verschoben, gekennzeichnet durch die Verschiebepfeile 14. Zusätzlich sind die äußeren Sitze 5d beide jeweils nach innen gedreht, gekennzeichnet durch die Verdrehpfeile 15, so daß die Passagiere der Sitze 5d eine in den Innenraum gerichtete Sitzhaltung einnehmen. Damit ergibt sich für alle drei Passagiere dieser Sitzreihe das in Figur 4 bereits beschriebene Komfortgefühl, allerdings mit dem zusätzlichen Effekt, daß die drei Passagiere der Sitzreihe sich besser gegenseitig sehen können, ohne daß dabei umständliche Bewegungen im Sitz erforderlich sind. Weiterhin erhöht sich durch die Drehung der äußeren Sitze 5d der gefühlte Abstand der Passagiere dieser Sitze von der Fahrzeugseitenwand 12. Dies führt, zumal die Kommunikation zwischen den drei Passagieren erleichtert ist, insgesamt zu einer weiteren Steigerung des Komfortgefühls.

Figur 6 zeigt eine Sitzanordnung eines Fahrzeuges mit einer erfindungsgemäßen Frontsitzreihe, wobei der Fahrersitz 16 und der äußere Beifahrersitz 17 die beiden äußeren Sitze darstellen, während der mittlere Beifahrersitz 18 den mittlern Sitz darstellt. Alle Sitze sind in Normalposition gezeigt, das heißt sie sind in einer Reihe angeordnet. Üblicherweise sind Fahrersitz 16 und der äußere Beifahrersitz 17 in Längsrichtung verschiebbar. Hier ist jedoch zusätzlich der mittlere Beifahrersitz 18 getrennt von den beiden äußeren Sitzen 16, 17 ausgeführt, d. h. die Beifahrer sitzen nicht auf einer Sitzbank, und der mittlere Beifahrersitz 18 ist unabhängig von den äußeren Sitzen 16, 17 in Längsrichtung verschiebbar. Gezeigt ist in Figur 6 nur die Frontsitzreihe in einem Fahrzeug 1. Dabei ist es selbstverständlich möglich, Fahrzeuge nur mit der erfinderischen Frontsitzreihenanordnung auszustatten und im hinteren Fahrzeugbereich eine andere Sitzanordnung oder gar keine Sitze vorzusehen. Die Frontsitzreihe kann aber auch mit weiteren erfinderischen Sitzreihen in den hinteren Fahrzeugbereich kombiniert werden.

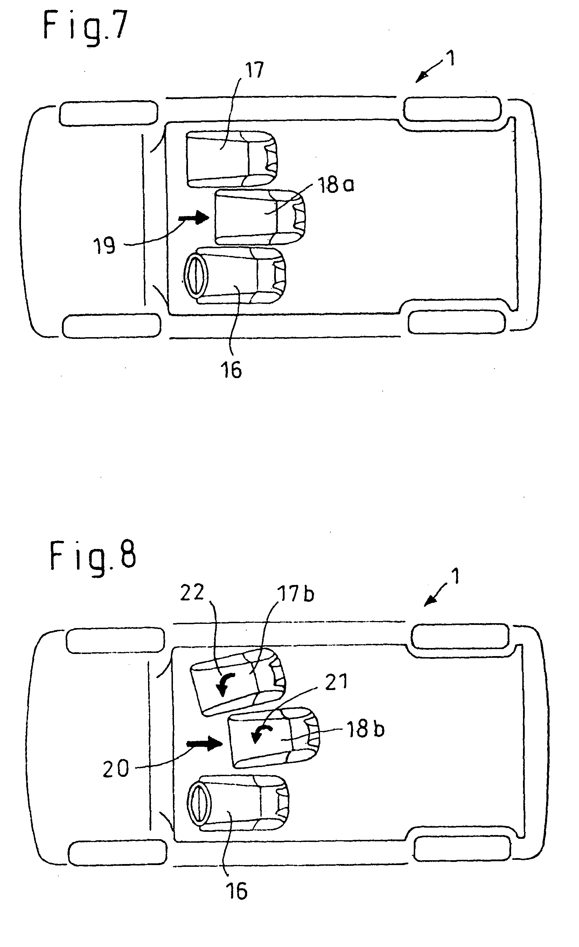

In Figur 7 ist die Sitzanordnung aus Figur 6 mit nach hinten verschobenem mittleren Beifahrersitz 18a gezeigt, gekennzeichnet durch den Verschiebepfeil 19. Indem der mittlere Beifahrer eine hintere Sitzposition einnimmt, erhöht sich für den Fahrer als auch für die beiden Beifahrer wesentlich die Schulterfreiheit, wodurch das Komfortgefühl gesteigert ist.

In Figur 8 ist die Sitzanordnung analog zu Figur 7 mit nach hinten verschobenem mittleren Beifahrersitz 18b gezeigt, gekennzeichnet durch den Verschiebepfeil 20. Zusätzlich sind der mittlere Beifahrersitz 18b um einen geringen Winkel und der äußere Beifahrersitz 17b um einen etwas größeren Winkel in Richtung des Fahrers gedreht, gekennzeichnet durch die Verdrehpfeile 21 bzw. 22. Durch die gedrehten Sitzpositionen der Beifahrersitze 17b und 18b können Fahrer und Beifahrer besser miteinander kommunizieren bei gleichzeitig erhöhtem Komfortgefühl aufgrund der größeren Schulterfreiheit.

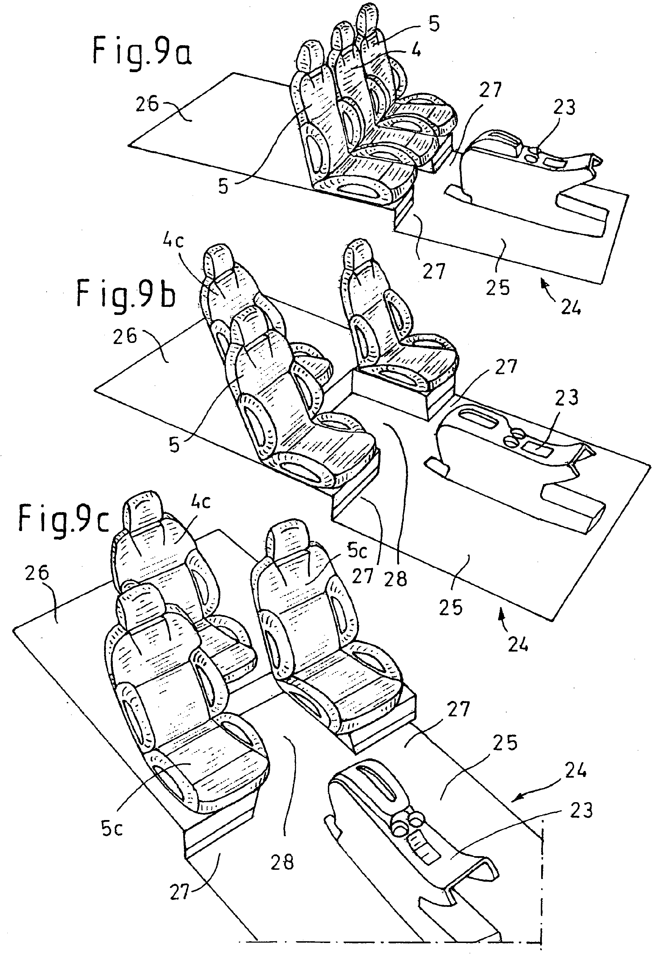

Die Figuren 9a - c zeigen die perspektivische Ansicht der Verschiebung der Sitzreihe aus Figur 4, wobei Figur 9a die Ausgangsposition gemäß Figur 1 darstellt, Figur 9b die Position mit zurückgeschobenen Mittelsitz 4c, und Figur 9c die Endposition mit den beiden äußeren Sitze 5c nach innen verschoben. Die beiden vorderen Sitze sind nicht dargestellt, schematisch ist die zwischen diesen beiden Sitzen angeordnete Mittelkonsole 23 dargestellt.

Weiterhin ist schematisch der Fahrzeugboden 24 dargestellt, wobei dieser eine vorderer, tiefere Ebene 25 und eine hintere, höhere Ebene 26 bildet. Teil der vorderen, tieferen Ebene 25 ist der Fußraum 27 für die Passagiere der Sitzreihe. Die hintere, höhere Ebene 26 bildet im wesentlichen den Gepäckraum. Damit der mittlere Passagier auch in der hinteren Sitzposition genügend Fußraum 28 zur Verfügung hat, ist zwischen den äußeren Sitzen 5 der Fahrzeugboden 24 abgesenkt, so daß ungefähr das Höhenniveau der vordern, tieferen Ebene 25 erreicht wird. Dies ist jedoch nur schematisch zu verstehen, natürlich kann konstruktiv oder funktional bedingt der Fußraum 28 ein von der vorderen Ebene 25 abweichendes Höhenniveau aufweisen.

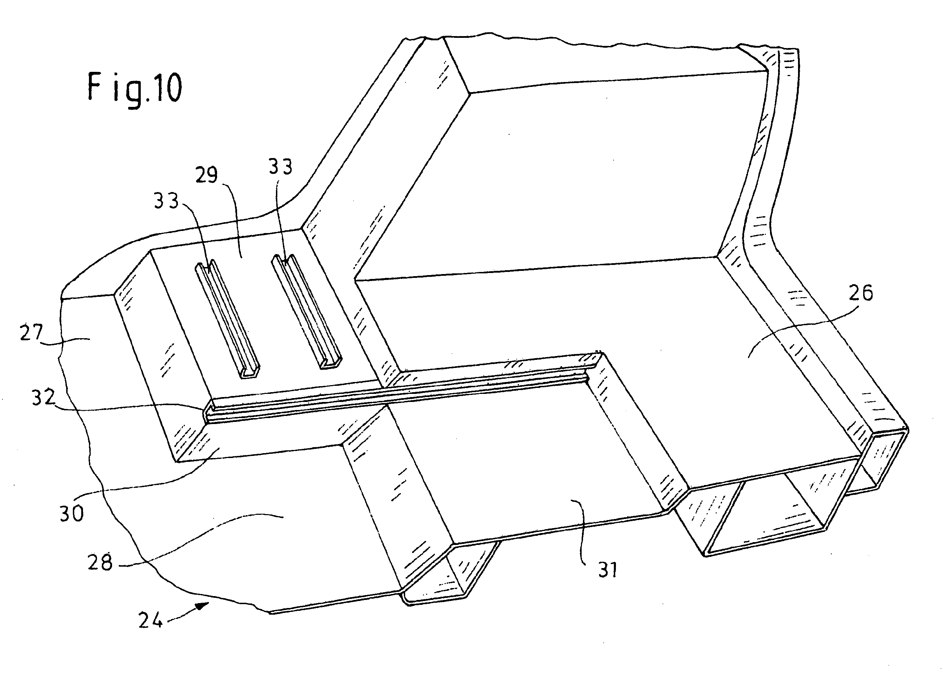

Figur 10 zeigt eine perspektivische Ansicht eines Fahrzeugbodens 24 für eine Sitzanordnung nach Figur 4. Dabei bildet der Fußraum 27 der Sitzreihe eine vordere, tiefere Ebene, und der Gepäckraum 26 eine hintere, höhere Ebene. Der Fahrzeugboden 24 im Fußraum 28 für den zurückgeschobenen mittleren Sitz weist etwa das Höhenniveau des Fahrzeugbodens 24 im Fußraum 27 der Sitzreihe auf. Unter den äußeren Sitzen weist der Fahrzeugboden 29 eine Höhe auf, die über dem Höhenniveau des Fahrzeugbodens 24 im Fußraum 28 des mittleren Sitzes ist. Eine Verbindungswand 30 verbindet den Fahrzeugboden 24 im Fußraum 28 des mittleren Sitzes mit dem Fahrzeugboden 29 unter den äußeren Sitzen. Hinter dem Fußraum 28 ist der Fahrzeugboden 31 gegenüber dem Gepäckraum 26 zumindest im Bereich des mittleren Sitzes in der hinteren Sitzposition geringfügig abgesenkt, um Platz für den nach hinten verschobenen mittleren Sitz zu schaffen.

An der Verbindungswand 30 ist eine Sitzschiene 32 für den mittleren Sitz befestigt. Dabei erstreckt sich die Sitzschiene 32 in den abgesenkten Bereich 31 unter dem mittleren Sitz. Eine gleiche Sitzschiene befindet sich spiegelbildlich zur Mittelebene des Fahrzeuges auf der anderen Seite des Fußraumes 28. Die beiden Sitzschienen bewirken eine breite und aufgrund der guten Befestigung der Sitzschienen an der überwiegend senkrechten Verbindungswand 30 eine sehr steife und festigkeitsmäßig günstige Lagerung des mittleres Sitzes. Weiterhin stören die Sitzschienen durch die überwiegende senkrechte Anordnung nicht den Sitzkomfort des mittleren Passagiers in der hinteren Sitzposition.

Auf dem Fahrzeugboden 29 und den äußeren Sitzen sind weitere, quer zur Fahrtrichtung des Fahrzeuges orientierte Sitzschienen 33 befestigt. In diesen ist ein äußerer Sitz 5 (hier nicht dargestellt) gelagert und erlaubt die in Figur 4 bzw. Figur 9c beschriebene Verschiebung des äußeren Sitzes nach innen.

## Patentansprüche

1. Sitzreihen-Anordnung eines Fahrzeuges, bestehend aus zwei äußeren Sitzen (2, 3, 16, 17) und einem mittleren Sitz (4, 18), wobei der mittlere Sitz (4a, 4b, 4c, 4d, 18a, 18b) aus der Normalposition zwischen den beiden äußeren Sitzen (5, 16, 17) nach vorne und/oder nach hinten in eine vordere und/oder eine hintere Sitzposition verschiebbar ist,
**dadurch gekennzeichnet, daß**
mindestens einer der äußeren Sitze (5d, 17b) drehbar ist, wenn der mittlere Sitz (4d, 18b) sich nicht in einer Position direkt neben diesem Sitz (5d, 17b) befindet, und wobei der mittlere Sitz (18b) in vorderer und/oder hinterer Sitzposition drehbar ist.

2. Sitzreihen-Anordnung nach Anspruch 1,
**dadurch gekennzeichnet, daß**
der mittlere Sitz eine zur Fahrzeuglängsachse gesehen schräge Verschieberichtung aufweist.

3. Sitzreihen-Anordnung nach Anspruch 1 oder 2,
**dadurch gekennzeichnet, daß**
der mittlere Sitz in vorderer und/oder hintere Sitzposition eine andere Sitzhöhe aufweist als in der Normalposition.

4. Sitzreihen-Anordnung nach einem der vorherigen Ansprüche,
**dadurch gekennzeichnet, daß**
die Verschiebung des mittleren Sitzes in die vordere und/oder die hintere Sitzposition eine gleichzeitige Verdrehung des Sitzes bewirkt.

5. Sitzreihen-Anordnung nach einem der vorherigen Ansprüche,
**dadurch gekennzeichnet, daß**
mindestens einer der äußeren Sitze (5b) in eine vordere und/oder hintere Sitzposition verschiebbar ist.

6. Sitzreihen-Anordnung nach einem der vorherigen Ansprüche,
**dadurch gekennzeichnet, daß**
mindestens einer der äußeren Sitze (5c, 5d) in eine innere Sitzposition verschiebbar ist, wenn der mittlere Sitz (4c, 4d) sich nicht direkt neben diesem Sitz (5c, 5d) befindet.

7. Sitzreihen-Anordnung nach Anspruch 6,
**dadurch gekennzeichnet, daß**
der äußere Sitz eine zur Fahrzeugquerachse gesehen schräge Verschieberichtung nach innen aufweist.

8. Sitzreihen-Anordnung nach Anspruch 5, 6 oder 7,
**dadurch gekennzeichnet, daß**
die Verschiebung des äußeren Sitzes in eine andere Sitzposition eine gleichzeitige Verdrehung des Sitzes bewirkt.

9. Sitzreihen-Anordnung nach einem der vorherigen Ansprüche,
**dadurch gekennzeichnet, daß**
die Sitze auf am Fahrzeugboden (24) befestigten Sitzschienen (32, 33) verschiebbar sind.

10. Sitzreihen-Anordnung nach einem der vorherigen Ansprüche,
**dadurch gekennzeichnet, daß**
jeder Sitz am Fahrzeugboden verankert ist und eigene Sitzschienen aufweist.

11. Fahrzeug mit einer Sitzreihen-Anordnung nach einem der vorherigen Ansprüche, bei dem ein mittlerer Sitz (4) nach hinten verschoben werden kann, und bei dem ein Fahrzeugboden (24) vor der Sitzreihe im Fußraum (27) der Sitzreihe eine tiefere Ebene (25) und hinter der Sitzreihe eine höhere Ebene (26) aufweist,
**dadurch gekennzeichnet, daß**
im Bereich zwischen den äußeren Sitzen (5) der Fahrzeugboden (24) so abgesenkt ist, daß vor dem zurückgeschobenen mittleren Sitz (4c) ein Fußraum (28) zwischen den beiden äußeren Sitzen (5) gebildet wird.

12. Fahrzeug nach Anspruch 11,
**dadurch gekennzeichnet, daß**
Sitzschienen (32) links und rechts des Fußraumes (28) für den mittleren Sitz (4) angeordnet sind.

13. Fahrzeug nach Anspruch 12,
**dadurch gekennzeichnet, daß**
eine Verbindungswand (30) den Fahrzeugboden (24) im Fußraum (28) des mittleren Sitzes mit einer unter einem äußeren Sitz (5) befindlichen höheren Ebene des Fahrzeugbodens (29) verbindet und eine Sitzschiene (32) an dieser Verbindungswand (30) befestigt ist.

## Claims

1. Seat row arrangement for a vehicle, comprising two outer seats (2, 3, 16, 17) and a central seat (4, 18), wherein the central seat (4a, 4b, 4c, 4d, 18a, 18b) can be displaced forward and/or rearward from the normal position between the two outer seats (5, 16, 17) into a front and/or a rear seat position, **characterized in that** at least one of the outer seats (5d, 17b) can be rotated if the central seat (4d, 18b) is not situated in a position directly next to this seat (5d, 17b), and wherein the central seat (18b) can be rotated in the front and/or rear seat position.

2. Seat row arrangement according to Claim 1, **characterized in that** the central seat has a diagonal direction of displacement as seen with respect to the longitudinal axis of the vehicle.

3. Seat row arrangement according to Claim 1 or 2, **characterized in that** the central seat in the front and/or rear seat position has a seat height which differs from that in the normal position.

4. Seat row arrangement according to one of the preceding claims, **characterized in that** the displacement of the central seat into the front and/or the rear seat position produces a simultaneous rotation of the seat.

5. Seat row arrangement according to one of the preceding claims, **characterized in that** at least one of the outer seats (5b) can be displaced into a front and/or rear seat position.

6. Seat row arrangement according to one of the preceding claims, **characterized in that** at least one of the outer seats (5c, 5d) can be displaced into an inner seat position if the central seat (4c, 4d) is not situated directly next to this seat (5c, 5d).

7. Seat row arrangement according to Claim 6, **characterized in that** the outer seat has a diagonal direction of displacement inwardly as seen with respect to the transverse axis of the vehicle.

8. Seat row arrangement according to Claim 5, 6 or 7, **characterized in that** the displacement of the outer seat into a different seat position produces a simultaneous rotation of the seat.

9. Seat row arrangement according to one of the preceding claims, **characterized in that** the seats can be displaced on seat rails (32, 33) mounted on the vehicle floor (24).

10. Seat row arrangement according to one of the preceding claims, **characterized in that** each seat is anchored to the vehicle floor and has dedicated seat rails.

11. Vehicle having a seat row arrangement according to one of the preceding claims, in which a central seat (4) can be displaced rearward, and in which a vehicle floor (24) has a lower level (25) in front of the seat row, in the foot space (27) of the seat row, and a higher level (26) behind the seat row, **characterized in that** the vehicle floor (24) is lowered in the region between the outer seats (5) in such a way that a foot space (28) is formed between the two outer seats (5) in front of the pushed-back central seat (4c).

12. Vehicle according to Claim 11, **characterized in that** seat rails (32) are arranged to the left and right of the foot space (28) for the central seat (4).

13. Vehicle according to Claim 12, **characterized in that** a connecting wall (30) connects the vehicle floor (24) in the foot space (28) of the central seat to a higher level of the vehicle floor (29) situated below an outer seat (5), and a seat rail (32) is mounted on this connecting wall (30).

## Revendications

1. Agencement de rangées de sièges dans un véhicule, constitué de deux sièges extérieurs (2, 3, 16, 17) et d'un siège central (4, 18), le siège central (4a, 4b, 4c, 4d, 18a, 18b) pouvant être déplacé de la position normale entre les deux sièges extérieurs (5, 16, 17) vers l'avant et/ou vers l'arrière dans une position de siège avant et/ou arrière,
**caractérisé en ce que**
au moins l'un des sièges extérieurs (5d, 17b) peut tourner lorsque le siège central (4d, 18b) ne se trouve pas dans une position directement à côté de ce siège (5d, 17b), et le siège central (18b) pouvant tourner dans une position de siège avant et/ou arrière.

2. Agencement de rangées de sièges selon la revendication 1,
**caractérisé en ce que**
le siège central présente une direction de déplacement oblique par rapport à l'axe longitudinal du véhicule.

3. Agencement de rangées de sièges selon la revendication 1 ou 2,
**caractérisé en ce que**
le siège central présente dans la position de siège avant et/ou arrière une hauteur de siège différente de celle dans la position normale.

4. Agencement de rangées de sièges selon l'une quelconque des revendications précédentes,
**caractérisé en ce que**
le déplacement du siège central dans la position de siège avant et/ou arrière provoque une rotation simultanée du siège.

5. Agencement de rangées de sièges selon l'une quelconque des revendications précédentes,
**caractérisé en ce**
**qu'**au moins l'un des sièges extérieurs (5b) peut être déplacé dans une position de siège avant et/ou arrière.

6. Agencement de rangées de sièges selon l'une quelconque des revendications précédentes,
**caractérisé en ce**
**qu'**au moins l'un des sièges extérieurs (5c, 5d) peut être déplacé dans une position de siège intérieure lorsque le siège central (4c, 4d) ne se trouve pas directement à côté de ce siège (5c, 5d).

7. Agencement de rangées de sièges selon la revendication 6,
**caractérisé en ce que**
le siège extérieur présente une direction de déplacement vers l'intérieur oblique par rapport à l'axe transversal du véhicule.

8. Agencement de rangées de sièges selon la revendication 5, 6 ou 7,
**caractérisé en ce que**
le déplacement du siège extérieur dans une autre position du siège provoque une rotation simultanée du siège.

9. Agencement de rangées de sièges selon l'une quelconque des revendications précédentes,
**caractérisé en ce que**
les sièges peuvent être déplacés sur des rails de sièges (32, 33) fixés au sol du véhicule (24).

10. Agencement de rangées de sièges selon l'une quelconque des revendications précédentes,
**caractérisé en ce que**
chaque siège est ancré au sol du véhicule et présente ses propres rails de siège.

11. Véhicule comprenant un agencement de rangées de sièges selon l'une quelconque des revendications précédentes, dans lequel un siège central (4) peut être déplacé vers l'arrière et dans lequel un sol de véhicule (24) présente, devant la rangée de sièges dans l'espace pour les pieds (27) de la rangée de sièges, un plan plus bas (25) et derrière la rangée de sièges un plan plus haut (26),
**caractérisé en ce que**
dans la région entre les sièges extérieurs (5), le sol du véhicule (24) est si encaissé qu'un espace pour les pieds (28) est formé entre les deux sièges extérieurs (5) devant le siège central en retrait (4c).

12. Véhicule selon la revendication 11,
**caractérisé en ce que**
des rails de sièges (32) sont disposés à gauche et à droite de l'espace pour les pieds (28) pour le siège central (4).

13. Véhicule selon la revendication 12,
**caractérisé en ce**
**qu'**une paroi de connexion (30) relie le sol du véhicule (24) dans l'espace pour les pieds (28) du siège central à un plan du sol du véhicule (29) plus haut se trouvant sous un siège extérieur (5), et en ce qu'un rail de siège (32) est fixé à cette paroi de connexion (30).
